# EUROPÄISCHE PATENTANMELDUNG

(11) **EP 1 679 131 A1**
(43) Veröffentlichungstag der Anmeldung: **12.07.2006**
(21) Anmeldenummer: 06000165.8
(22) Anmeldetag: 05.01.2006
(51) Int. Cl.: B09C 1/08, B28C 7/02, E02F 5/12

(54) **Vorrichtung zum Aufbereiten von Bodenaushub**

(30) Priorität: 05.01.2005 DE 202005000124 U
(71) Anmelder: Kevekordes, Mario, 35066 Frankenberg (DE)
(72) Erfinder: Kevekordes, Mario, 35066 Frankenberg (DE)
(74) Vertreter: Buchhold, Jürgen

(57) **Zusammenfassung**

Eine bevorzugt als Fahrzeug (12) ausgebildete Vorrichtung (10) zum Aufbereiten von Bodenaushub (B) hat eine Mischvorrichtung (20) zur Aufnahme des Bodenaushubs (B), einen ersten Behälter (30) für einen ersten Zuschlagsstoff (Z1), der über eine Zuführleitung (34) dosiert in die Mischvorrichtung (20) einbringbar ist, sowie wenigstens einen weiteren Vorratsbehälter (40) für einen weiteren Zuschlagstoff (Z2), der über eine weitere Zuführleitung (44) dosiert in die Mischvorrichtung (20) einbringbar ist. Darüber hinaus ist ein Wassertank vorhanden, aus dem Wasser dosiert in die Mischvorrichtung (20), in den ersten Behälter (30) und/oder in jeden weiteren Behälter (40) einbringbar ist. Eine Rechnereinheit (50) führt zur Herstellung einer fließfähigen Mischung (M) dem in der Mischvorrichtung (20) eingefüllten Bodenaushub (B) anhand eines in der Rechnereinheit (50) gespeicherten Steuerprogramms (54) eine definierte Menge von dem ersten Zuschlagsstoff (Z1) und/oder eine definierte Menge von jedem weiteren Zuschlagstoff (Z2) sowie eine definierte Menge Wasser zu. Das Ausbringen der fließfähigen mörtelähnlichen Mischung (M) aus der Mischvorrichtung (20) erfolgt über eine Einrichtung (70), die eine Pumpe, eine Rutsche, eine Schütte, ein Förderband o.dgl. sein kann.

## Beschreibung

Die Erfindung betrifft eine Vorrichtung zum Aufbereiten von Bodenaushub.

Im Leitungsbau aber auch bei der Leitungs- oder Kanalsanierung muß zunächst ein Aushub vorgenommen werden, um entweder neue Leitungen bzw. Rohre verlegen zu können oder um beschädigte oder überalterte Bauwerke erneuern zu können.

Der Bodenaushub wird gewöhnlich von einem Bagger auf einen LKW verladen und mit diesem von der Baustelle abtransportiert. Dadurch entstehen - je nach Größe des Bauvolumens und der Entfernung zu einer geeigneten Deponie - sowohl Transportkosten als auch Kosten für die Zwischenlagerung des Aushubmaterials, das - wenn es mit Schadstoffen kontaminiert ist - meist als Sondermüll entsorgt werden muß.

Sind die Bauarbeiten beendet, wird der ursprüngliche Aushub oder eine entsprechende Menge Ersatzmaterial wieder antransportiert und in den Kanal verfüllt. Hierbei muß man lagenweise vorgehen und jede einzelne Schicht sorgfältig mit Rüttelplatten, Rüttelwalzen oder Grabenwalzen verfestigen. Dies ist äußerst aufwendig und mühsam. Werden die Verdichtungsarbeiten nicht ordnungsgemäß ausgeführt, kann es später zu Setzrissen oder Absenkungen im Straßen- oder Bodenbelag führen, was Nacharbeiten erfordert. Durch die Erschütterungen der Verdichtungsmaschinen können die zugeschütteten Bauwerke Schaden nehmen, der von außen nicht mehr erkennbar ist. Zusätzliche Kosten sind mithin vorprogrammiert.

Um dem zu begegnen ist es beispielsweise aus DE-C2-198 51 256 oder DE-C2-199 09 817 bekannt, aus dem vor Ort gewonnenen Bodenaushub oder aus einem anderen Ersatzmaterial unter Zugabe geeigneter Zuschlagstoffe einen Verfüllstoff herzustellen, der in fließfähiger Form in den zu verfüllenden Graben eingebracht werden kann. Das mörtelähnliche Material nivelliert sich dabei selbständig und erhärtet anschließend, wobei die Festigkeit über die Zuschlagstoffe so einstellbar ist, daß Tragfähigkeiten entstehen, die auch mit konventionellen Verfüllmaterialien und -verfahren erreichbar sind.

Zur Herstellung des Verfüllmaterials wird der Bodenaushub mittels einer LKW-Flotte in eine geeignete Deponie verbracht und dort durch Zumischen bestimmter Zuschlagstoffe aufbereitet. Hierbei entsteht ein fließfähiges Füllmaterial, das ohne jede Nachbearbeitung unmittelbar in den Leitungsgraben eingefüllt werden kann. Es muß nicht einmal Lagenweise eingebracht oder gar verdichtet werden, so daß selbst die gleichzeitige Verlegung mehrerer Rohre oder Leitungen problemlos möglich ist. Weil keine Verdichtungsmaschinen mehr notwendig sind, kommt man innerhalb der Leitungsgräben ohne zusätzliche Arbeitsräume aus, was den Kostenaufwand weiter reduziert.

Problematisch hierbei ist allerdings, daß sich durch das bekannte Vorort-Verfüllmaterial zwar dessen Menge und damit der Straßenaufbruch und die -wiederherstellung reduzieren lassen. Der vor Ort anfallende Bodenaushub muß jedoch weiterhin zur nächstgelegenen Deponie abtransportiert, dort in speziellen Mischanlagen aufbereitet und anschließend wieder zurück transportiert werden. Dies verursacht nicht nur weiterhin erhebliche Transport- und Fahrzeugkosten. Auch die Personalkosten sind kaum zu reduzieren, weil die einzelnen Arbeitsschritte jeweils von verschiedenen Fachkräften auszuführen sind.

Aufgabe der Erfindung ist es, diese und weitere Nachteile des Standes der Technik zu vermeiden und eine Vorrichtung zum Aufbereiten von Bodenaushub zu schaffen, die unmittelbar vor Ort einsetzbar ist und mit der es möglich ist, den auf der Baustelle anfallenden Bodenaushub unmittelbar zu einem stabilisierten, selbstverdichtenden und selbstabbindenden Füllmaterial zu verarbeiten und anschließend zu verfüllen. Die Vorrichtung soll mit einfachen Mitteln kostengünstig aufgebaut und stets zuverlässig zu handhaben sein, insbesondere auch durch angelerntes Personal.

Hauptmerkmale der Erfindung sind im kennzeichnenden Teil von Anspruch 1 angegeben. Ausgestaltungen sind Gegenstand der Ansprüche 2 bis 34.

Eine Vorrichtung zum Aufbereiten von Bodenaushub, hat wenigstens eine Mischvorrichtung zur Aufnahme des Bodenaushubs, wenigstens einen ersten Behälter für einen ersten Zuschlagsstoff, der über eine Zuführleitung dosiert in die Mischvorrichtung einbringbar ist, wenigstens einen zweiten Vorratsbehälter für einen zweiten Zuschlagstoff, der über eine zweite Zuführleitung dosiert in die Mischvorrichtung einbringbar ist, eine Rechnereinheit, die zur Herstellung einer fließfähigen Mischung dem in die Mischvorrichtung eingefüllten Bodenaushub anhand eines in der Rechnereinheit gespeicherten Steuerprogramms eine erste Menge von dem ersten Zuschlagsstoff und/oder eine zweite Menge von dem zweiten Zuschlagstoff zuführt, und eine Einrichtung zum Ausbringen der fertigen Mischung aus der Mischvorrichtung, wobei die Vorrichtung ein Fahrzeug ist.

Durch diese ebenso einfach wie kostengünstig herstellbare Vorrichtung muß der Bodenaushub nicht mehr ausgehoben, von der Baustelle abtransportiert und in einer geeignet ausgestatteten Deponie oder einem Mischwerk verarbeitet werden. Die Zubereitung des Mörtels kann vielmehr direkt vor Ort auf der Baustelle erfolgen, was nicht nur den Abtransport des Bodenaushubs vermeidet, sondern auch den erneuten Antransport der fertigen Mischung. Der Transportaufwand ist auf in Minimum reduziert.

Weitere Vorteile sind:
■ je nach Größe der Baustelle ist nur ein Fahrzeug erforderlich, das direkt vor Ort die benötigte Füllmasse selbständig herstellt;
■ Verringerung der Grabenbreite auf ein Minimum;
■ Mengenreduzierung;
■ keine Deponierung erforderlich;
■ keine Verdichtung und keine Verdichtungsprüfung erforderlich;
■ keine Erschütterungen, d.h. die Lebensdauer der eingebauten Bauwerke erhöht sich;
■ weniger Personalkosten. Der Fahrer des erfindungsgemäßen Fahrzeugs ist ohne weiteres in der Lage mit wenigen Handgriffen und einfachen Tätigkeiten den gesamten Aufbereitungsprozeß zu begleiten bzw. auszuführen. Zusätzliche Mitarbeiter sind nicht erforderlich, weder auf der Baustelle noch auf einer Deponie. Die Aufbereitung des Bodenaushubs wird automatisch von der Rechnereinheit gesteuert, die noch dazu die erstellte und verfüllte Mischung protokolliert, damit der Bauunternehmer einen Nachweis für die ausgeführte Verfüllung vorlegen kann;
■ Umweltschonend.

Der wesentliche Erfolg der erfindungsgemäßen Vorrichtung liegt jedoch in der Herstellung des Bodenmörtels direkt vor Ort auf der Baustelle. Dadurch ergeben sich kurze Fahrwege und -zeiten. Der Bodenaushub wird direkt an der Ausbaustelle aufgenommen, durch Zugabe der erforderlichen Zuschlagstoffe aufbereitet und sogleich wieder Eingebaut. Durch diese Vorgehensweise wird stets eine optimale, dem Boden angepaßte Mischung erzeugt.

Die Basis der Vorrichtung bildet ein Fahrzeug, vorzugsweise mit Straßenverkehrszulassung. Durch den Anbau von Behältern für Zuschlagstoffe und Wasser sowie der Installation von Meßeinrichtungen zur Erfassung der vermischten Mengen, läßt sich mit Hilfe der Rechnereinheit und den darin gespeicherten Rezeptprogrammen eine stets optimale und für Gewährleistungszwecke dokumentierbare Mischung mit dem Aushub vor Ort herstellen.

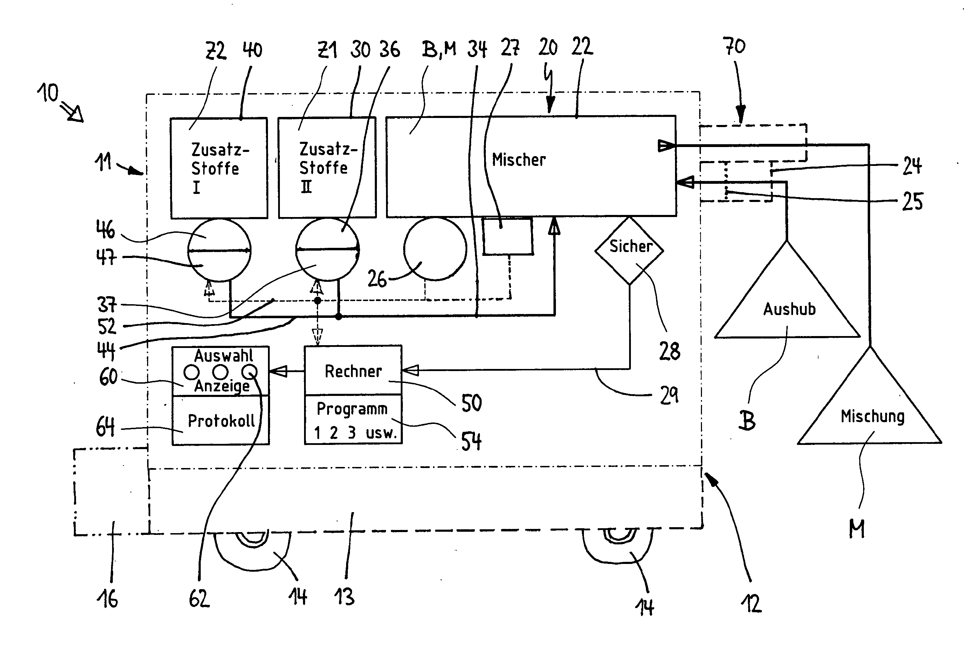

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung.

Diese zeigt in schematischer Darstellung eine allgemein mit 10 bezeichnete Vorrichtung zum Aufbereiten von Bodenaushub B, der durch dosierte Zugabe von Wasser und/oder Zuschlagstoffen Z1, Z2 zu einer fließfähigen, mörtelähnlichen Mischung M verarbeitet wird.

Die Vorrichtung 10 ist für den Einsatz auf einer Baustelle als Fahrzeug 12 mit Straßenverkehrszulassung ausgebildet, insbesondere als Lastkraftwagen (Lkw), der - neben weiteren nicht näher dargestellten Fahrzeug-Komponenten - einen Rahmen oder ein Chassis 13 sowie Räder 14 und einen Antrieb 16 aufweist. Der Antrieb 16 ist z.B. ein Verbrennungsmotor, vorzugsweise ein Dieselmotor.

Auf dem Fahrzeug 12 ist zur Aufnahme des Bodenaushubs B eine Mischvorrichtung bzw. ein Mischer 20 montiert. Dieser hat einen Mischbehälter 22 sowie einen Einfülltrichter 24, der so dimensioniert ist, daß die Mischvorrichtung 20 von einem (nicht gezeigten) Bagger befüllt werden kann. Über oder in dem Einfülltrichter 24 ist ein Sieb 25 angeordnet, das größere Gesteins- oder Asphaltbrocken abfängt, die für den Mischvorgang nicht geeignet sind. Durch Auswechseln des Siebes 25 kann dessen Maschenweite verändert werden. Zweckmäßig kann man aber auch eine (nicht dargestellte) Siebanordnung mit veränderlicher Maschenweite verwenden. Eine unterhalb der Mischvorrichtung 20 angeordnete Meßeinrichtung 26 - vorzugsweise eine Waage - erfaßt, welche Menge an Bodenaushub B in den Mischbehälter 22 eingefüllt bzw. welche Menge an Mischung M erzeugt worden ist.

Je nach Anordnung der Mischvorrichtung 20 auf dem Fahrzeug 12 kann es zweckmäßig sein, wenn der von dem Bagger zugeführte Aushub B über ein (nicht dargestelltes) Förderband dem Mischbehälter 22 oder dem Einfülltrichter 24 zugeführt wird. Das Förderband ist bevorzugt in bzw. unter dem Einfülltrichter 24 angeordnet. Es kann aber auch schwenkbar und/oder ausziehbar ausgeführt sein, wenn beispielsweise ein Heranfahren mit dem Lkw 12 an den auszuhebenden Graben nicht möglich und der Bewegungsspielraum des Baggers begrenzt ist.

In einer weiteren Ausführungsform ist vorgesehen, daß der Einfülltrichter 24 und/oder das Förderband 24 mit einem Rüttelwerk ausgerüstet sind. Dadurch können selbst schwierige Böden geladen und verarbeitet werden, beispielsweise Schluffe, Lehme oder Tone.

Die Mischvorrichtung 20 ist beispielsweise ein Ein- oder Mehrwellen-Zwangsmischer, der bei Bedarf mit Schlagwerkzeugen versehen sein kann und der von einem Motor 27 angetrieben wird. Hierbei handelt es sich beispielsweise um einen Hydraulikmotor, der an die Hydraulik des Lkw 12 angeschlossen ist. Oder man verwendet einen Elektromotor, der über das Bordnetz des Lkw 12 mit Strom versorgt wird. Eine Sicherheitseinrichtung 29 überwacht die Bewegungen der Mischvorrichtung 20, damit Störungen oder Fehlfunktionen rechtzeitig erkannt werden.

Neben der Mischvorrichtung sind auf dem Fahrzeug 12 zwei Behälter 30, 40 zur Aufnahme der Zuschlagstoffe Z1, Z2 montiert, die jeweils über eine Zuführleitung 34, 44 und eine Fördereinrichtung 36, 46 - beispielsweise eine Pumpe oder eine Förderschnecke - dosiert in den Mischbehälter 22 einbringbar sind. Zur Erfassung der Fördermengen an Zuschlagstoffen Z1, Z2 ist in jeder Zuführleitung 34, 44 eine Meßeinrichtung 37, 47 vorgesehen, die - je nach Art und Konsistenz der Zuschlagstoffe Z1, Z2 - als Waage oder Durchflußmesser ausgebildet sein kann.

Der erste Behälter 30 enthält den ersten Zuschlagstoff Z1. Hierbei handelt es sich bevorzugt um einen Plastifikator in Form einer wäßrigen, pumpfähigen Suspension, die im wesentlichen aus Wasser und einem quellfähigen Tonmehl besteht. In dem Behälter 30 kann ein (nicht dargestelltes) Misch- oder Rührwerk integriert sein, um entweder die Suspension Z1 auf dem Fahrzeug 12 mischen bzw. herstellen zu können oder um zu verhindern, daß sich in einer bereits vorbereiteten Suspension 12 Sedimente oder Klumpen bilden.

Der zweite Behälter 40 nimmt den zweiten Zuschlagstoff Z2 auf, nämlich einen Stabilisator wie z.B. Zement, Kalk oder Flugasche. Diese Materialien liegen bevorzugt in pulverförmigem Zustand vor. Man kann den zweiten Zuschlagstoff Z2 aber auch als fließfähige Suspension herstellen. Zu diesem Zweck ist dann auch in dem zweiten Behälter 40 ein (nicht gezeigtes) Misch- oder Rührwerk eingebaut.

Die für die Herstellung der Suspensionen Z1, Z2 notwendige Menge Wasser wird in einem ebenfalls auf dem Fahrzeug 12 montierten (nicht dargestellten) Wassertank zur Verfügung gestellt. Das Wasser wird mit einer (ebenfalls nicht gezeigten) Pumpe über entsprechende (gleichfalls nicht gezeichnete) Wasserleitungen dosiert in die Behälter 30 und/oder 40 eingebracht. Ergänzend oder Alternativ kann das Wasser aber auch direkt der Mischvorrichtung (20) zugeführt werden.

Bei der Verwendung fertig vorbereiteter Zuschlagstoffe Z1, Z2, ist es zweckmäßig, wenn die Behälter 30, 40 lösbar an dem Fahrzeug 12 befestigt sind. Diese können dadurch jederzeit rasch und bequem ausgewechselt werden, insbesondere dann, wenn sie leer sind oder wenn ein anderer Zuschlagstoff Z1, Z2 oder eine andere Zuschlagmischung benötigt wird.

Je nach Beschaffenheit des Bodenaushubs B kann es erforderlich sein, den Zuschlagstoffen Z1, Z2 und/oder dem Bodenaushub B bzw. der entstehenden Mischung M weitere Zuschlagstoffe beizumischen, beispielsweise Abbindebeschleuniger oder -verzögerer, die geeignet sind, den Aus- bzw. Erhärtungsprozeß zu beeinflussen. Zu diesem Zweck ist auf dem Fahrzeug 12 wenigstens ein weiterer (nicht dargestellter) Zusatzbehälter vorgesehen, der über entsprechende (nicht gezeigte) Zuführleitungen und Fördereinrichtungen mit den Behältern 30, 40 und/oder mit der Mischvorrichtung 20 in Verbindung steht. Die Mengenerfassung für den weiteren Zuschlagstoff erfolgt über eine weitere Meßeinrichtung oder mit Hilfe der bereits vorhandenen Meßeinrichtungen 26, 37, 47.

Man erkennt, daß die Mischvorrichtung 20, die Behälter 30, 40, der Wassertank, die gegebenenfalls vorhandenen Zusatzbehälter, die Zuführleitungen 34, 44 und die Einrichtung 70 zum Ausbringen der fertigen Mischung M einen Fahrzeug-Aufbau 11 bilden, der auf dem Fahrzeug 12 bzw. dessen Rahmen 13 montiert bzw. montierbar ist. Das Fahrzeug 12 selbst kann eine Sonderanfertigung sein oder ein modifizierter Betonmischer. In diesem Fall ist die Mischvorrichtung 20 ein Freifallmischer, der von dem fahrzeugeigenen Antrieb 27 rotierend angetrieben wird. Man kann den Aufbau 11 aber auch als offenen oder geschlossenen (nicht näher bezeichneten) Absetz- oder Abroll-Container ausbilden, der rasch und bequem mit einem (gleichfalls nicht dargestellten) Containerfahrzeug transportiert werden kann.

Eine im Fahrzeug 12 oder im Aufbau 11 installierte Rechnereinheit 50 übernimmt die Dosierung und Zuführung der Zuschlagstoffe Z1, Z2 sowie die Steuerung und Überwachung des Mischvorgangs. Die Rechnereinheit 50 ist hierzu über Signal- bzw. Steuerleitungen 52 mit den Fördereinrichtungen 36, 46 der Behälter 30, 40 und der gegebenenfalls vorhandenen Zusatzbehälter und Wassertanks verbunden. Ferner sind die Signal- und Steuerleitungen 52 an den jeweils zugeordneten Meßeinrichtung 26, 37, 47 und dem Antrieb 27 der Mischvorrichtung 20 angeschlossen.

Die Rechnereinheit 50 hat ein (nicht gezeigtes) internes Speichermedium. Darin sind mehrere Steuerprogramme 54 gespeichert, die zur Herstellung der fließfähigen Mischung M anhand bestimmter Rezepturen dem in der Mischvorrichtung 20 eingefüllten Bodenaushub B eine definierbare Menge von dem ersten Zuschlagsstoff Z1 und eine definierbare Menge von dem zweiten Zuschlagstoff Z2 zuführt. Die Bedienung der Rechnereinheit 50 erfolgt über eine Auswahl- und Anzeigeeinheit 60. Die Zuführung der weiteren Zuschlagstoffe und/oder des Wassers erfolgt in der gleichen Art und Weise.

Der Fahrzeugführer wählt über die Auswahl- und Anzeigeeinheit 60 - je nach Menge und Beschaffenheit des Bodenaushubs B - entsprechend der gewünschten Fließfähigkeit der benötigten Mischung M ein Rezeptprogramm aus. Nach dieser Programmauswahl erfolgt das Einfüllen des Bodenaushubs B in den Mischbehälter 22. Dabei zeigt ein Signalgeber 62, z.B. ein grünes Lichtsignal, dem Baggerfahrer an, daß weiter Bodenaushub B eingefüllt werden muß. Ist die notwendige Menge erreicht, zeigt ein rotes Lichtsignal an, daß kein Aushub B mehr in den Mischer 20 eingebracht werden darf. Die Überwachung erfolgt zweckmäßig über die Meßeinrichtung 26. Der Antrieb 27 des Mischbehälters 22 wird von der Rechnereinheit 50 gestartet. Dessen Drehrichtung sowie das Verhalten der (nicht dargestellten) Mischwerkzeuge wird von der Sicherungseinrichtung 28 überwacht, die ebenfalls über eine Datenleitung 29 mit der Rechnereinheit 50 verbunden ist.

Mit dem Anfahren des Mischvorgangs startet die Rechnereinheit 50 die Zuführung des ersten Zuschlag stoffs Z1 aus dem Behälter 30, indem über die Fördereinrichtung 36 die erforderliche Menge dosiert in den Mischbehälter 22 abgegeben wird. Die Meßeinrichtung 37 mißt dabei die tatsächlich eingebrachte Menge, so daß die von dem Steuerprogramm 54 vorgegebene Rezeptur exakt eingehalten wird. Ergänzend (aus Sicherheitsgünden) oder alternativ kann man die eingebrachte Menge auch über die Waage 26 erfassen.

Nach Erreichen der durch das Rezeptprogramm 54 festgelegten Menge für den ersten Zuschlagstoff Z1 erfolgt das Einbringen und Zumischen des zweiten Zuschlagstoffs Z2 und/oder der weiteren Zuschlagstoffe in gleicher Weise. Die Dosierung des zweiten Zuschlagstoffs Z2 übernimmt die Fördereinrichtung 46, während die Meßeinrichtung 47 und/oder die Waage 26 die eingebrachte Menge überwacht. Werden zusätzliche Mengen Wasser benötigt, so wird auch dies von der Rechnereinheit 50 entsprechend abgearbeitet.

Ist die Rezeptur vollständig und der Mischvorgang abgeschlossen, wird von der Rechnereinheit 50 über die Auswahl- und Anzeigeeinheit 60 durch einen weiteren Signalgeber 62, vorzugsweise ein grünes Blink- oder Lichtsignal, das Einbringen der erzeugten Mischung M in den ausgehobenen Graben freigegeben.

Das Ausbringen der Mischung M wird bevorzugt über die Auswahl- und Anzeigeeinheit 60 gestartet. Man den Vorgang aber auch über eine Fernsteuerung betätigen. Das Material M fließt über eine geeignete Einrichtung 70 des Fahrzeugs 12, z.B. eine Austragsschurre, eine Pumpe, eine Rutsche, eine Schütte, ein Förderband o.dgl., in den zu verfüllenden Graben oder Hohlraum und nivelliert sich dort selbständig. Ein Verdichten des Materials M ist nicht erforderlich.

Sämtliche Mengen an Zuschlagstoffen Z1, Z2, weiteren Zuschlagstoffen und/oder Wasser sowie die Ausgangsmenge an Bodenaushub B und die Endmenge an Mischgut M werden zur Protokollierung in der Rechnereinheit 50 gespeichert. Dadurch ist es möglich, einen lückenlosen Nachweis über die tatsächlich verfüllte Mischung M zu führen. Zweckmäßig werden die von der Rechnereinheit 50 protokollierten bzw. gespeicherten Werte über eine Ausgabeeinheit 64 ausgegeben. Letztere ist bevorzugt ein Drucker. Man kann die Daten aber auch auf einem Bildschirm anzeigen lassen, zur weiteren Verarbeitung an eine Schnittstelle weiterleiten oder auf einen Datenträger übertragen.

Ergänzend zu den verarbeiteten Stoffmengen B, Z1, Z2, M kann die Rechnereinheit 50 zusätzliche auch Fahr- und Verbrauchswerte des Fahrzeugs 12 erfassen und protokollieren, so daß beispielsweise eine genauere Kostenkalkulation oder ein verbesserter Kostennachweis möglich ist.

In einer alternativen Verfahrensweise erfolgt die Programmauswahl nicht durch den Fahrzeugführer, sondern durch die Rechnereinheit 50 selbst, und zwar anhand der in die Mischvorrichtung 20 eingebrachten Menge an Bodenaushub B und dessen Eigenschaften, die zuvor als Parameter in die Auswahl- und Anzeigeeinheit 60 eingegeben worden sind. Weitere Parameter wie beispielsweise Beschaffenheitsangaben, Mengenangaben, Misch- und/oder Verfahrensparameter sind ebenfalls als Meßwerte oder als Erfahrungswerte vorgebbar und zweckmäßig im Speicher der Rechnereinheit 50 abrufbar gespeichert.

Gibt man nun die Art der Bodenaushubs B vor, so ist die Rechnereinheit 50 in der Lage, das passende Rezeptprogramm 54 selbst auszuwählen und abzuarbeiten.

Die Erfindung ist nicht auf eine der vorbeschriebenen Ausführungsformen beschränkt, sondern in vielfältiger Weise abwandelbar. So kann die Vorrichtung 10 auch als Anhänger ausgebildet sein oder als Schienenfahrzeug. Beides hat je nach Einsatzort seine Vorzüge.

Die Waage 26 muß nicht zwingend unterhalb der Mischvorrichtung 20 angeordnet sein. Sie kann auch in einer (nicht dargestellten) Stützvorrichtung integriert sein, mit der sich das Fahrzeug 12 während des Mischbetriebes am Untergrund abstützt.

Die Auswahl- und Anzeigeeinrichtung 60 kann alternativ oder zusätzlich einen akustischen, und/oder taktilen Signalgeber 62 aufweisen, um anzuzeigen, daß kein Bodenaushub B mehr in die Mischvorrichtung 20 eingefüllt werden darf oder daß der Mischvorgang beendet ist. Man kann die Signalgeber 62 aber auch dazu verwenden, um vor Gefahren oder Störungen zu warnen.

Die Mischung M kann zum Verfüllen von Hohlräumen wie stillgelegten Kanälen, Erdverschiebungen oder Erdtanks verwendet werden.

Besondere Vorzüge ergeben sich, wenn die Vorrichtung 10 modular aufgebaut ist, d.h. wenn einzelne Komponenten, wie die Mischvorrichtung 20 oder die Behälter 30, 40 einzeln austauschbar oder ersetzbar sind. Dies hat nicht nur Vorteile bei eventuell anfallenden Reparaturarbeiten. Auch kann die Vorrichtung 10 bzw. das Fahrzeug 12 rasch und bequem den unterschiedlichsten Anforderungen angepaßt werden.

Man erkennt, daß eine Vorrichtung 10 zum Aufbereiten von Bodenaushub B bevorzugt als Fahrzeug 12 ausgebildet ist. Dessen Aufbau 11 hat eine Mischvorrichtung 20 zur Aufnahme des Bodenaushubs B, einen ersten Behälter 30 für einen ersten Zuschlagsstoff Z1, der über eine Zuführleitung 34 dosiert in die Mischvorrichtung 20 einbringbar ist, sowie wenigstens einen weiteren Vorratsbehälter 40 für einen weiteren Zuschlagstoff Z2, der über eine weitere Zuführleitung 44 dosiert in die Mischvorrichtung 20 einbringbar ist. Darüber hinaus ist ein Wassertank vorhanden, aus dem Wasser dosiert in die Mischvorrichtung 20, in den ersten Behälter 30 und/oder in jeden weiteren Behälter 40 einbringbar ist. Eine Rechnereinheit 50 führt zur Herstellung einer fließfähigen Mischung M dem in der Mischvorrichtung 20 eingefüllten Bodenaushub B anhand eines in der Rechnereinheit 50 gespeicherten Steuerprogramms 54 eine definierte Menge von dem ersten Zuschlagsstoff Z1 und/oder eine definierte Menge von jedem weiteren Zuschlagstoff Z2 sowie eine definierte Menge Wasser zu. Das Ausbringen der fließfähigen mörtelähnlichen Mischung M aus der Mischvorrichtung 20 erfolgt über eine Einrichtung 70, die eine Pumpe, eine Rutsche, eine Schütte, ein Förderband o.dgl. sein kann

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- B: Bodenaushub
- M: fließfähige Mischung
- Z1: erster Zuschlagsstoff
- Z2: zweiter Zuschlagsstoff

- 10: Vorrichtung
- 11: Fahrzeug-Aufbau
- 12: Fahrzeug
- 13: Rahmen / Chassis
- 14: Rad
- 16: Antrieb

- 20: Mischvorrichtung
- 22: Mischbehälter
- 24: Einfülltrichter
- 25: Sieb
- 26: Meßeinrichtung/Waage
- 27: Motor
- 28: Sicherheitseinrichtung
- 29: Datenleitung

- 30: erster Behälter
- 34: Zuführleitung
- 36: Fördereinrichtung
- 37: Meßeinrichtung

- 40: zweiter Vorratsbehälter
- 44: Zuführleitung
- 46: Fördereinrichtung
- 47: Meßeinrichtung

- 50: Rechnereinheit
- 52: Signal- / Steuerleitung
- 54: Steuerprogramm

- 60: Auswahl- und Anzeigeeinrichtung
- 62: Signalgeber
- 64: Ausgabeeinheit

- 70: Einrichtung

## Patentansprüche

1. Vorrichtung (10) zum Aufbereiten von Bodenaushub (B),
a) mit wenigstens einer Mischvorrichtung (20) zur Aufnahme des Bodenaushubs (B),
b) mit wenigstens einem ersten Behälter (30) für einen ersten Zuschlagsstoff (Z1), der über eine Zuführleitung (34) dosiert in die Mischvorrichtung (20) einbringbar ist,
c) mit wenigstens einem zweiten Vorratsbehälter (40) für einen zweiten Zuschlagstoff (Z2), der über eine zweite Zuführleitung (44) dosiert in die Mischvorrichtung (20) einbringbar ist,
d) mit einer Rechnereinheit (50), die zur Herstellung einer fließfähigen Mischung (M) dem in der Mischvorrichtung (20) eingefüllten Bodenaushub (B) anhand eines in der Rechnereinheit (50) gespeicherten Steuerprogramms (54) eine erste Menge von dem ersten Zuschlagsstoff (Z1) und/oder eine zweite Menge von dem zweiten Zuschlagstoff (Z2) zuführt, und
e) mit einer Einrichtung (70) zum Ausbringen der fertigen Mischung (M) aus der Mischvorrichtung (20),
f) wobei die Vorrichtung (10) ein Fahrzeug (12) ist.

2. Vorrichtung nach Anspruch 1, **dadurch gekennzeichnet, daß** die Mischvorrichtung (20), der erste Behälter (30), der zweite Behälter (40), die Rechnereinheit (50) und die Einrichtung (70) zum Ausbringen der fertigen Mischung (M) einen Fahrzeug-Aufbau (11) bilden.

3. Vorrichtung nach Anspruch 1 oder 2, **dadurch gekennzeichnet, daß** das Fahrzeug (12) Straßenverkehrszulassung besitzt oder für den Schienenverkehr zugelassen ist.

4. Vorrichtung nach einem der Ansprüche 1 bis 3, **dadurch gekennzeichnet, daß** das Fahrzeug (12) ein Anhänger ist.

5. Vorrichtung nach Anspruch 1 bis 4, **dadurch gekennzeichnet, daß** das Fahrzeug (12) einen eigenen Antrieb (16) aufweist.

6. Vorrichtung nach einem der Ansprüche 1 bis 5, **dadurch gekennzeichnet, daß** das Fahrzeug (12) ein modifizierter Betonmischer oder ein modifiziertes Containerfahrzeug ist.

7. Vorrichtung nach Anspruch 6, **dadurch gekennzeichnet, daß** der Fahrzeug-Aufbau (11) ein abnehmbarer Container ist oder einen solchen bildet.

8. Vorrichtung nach einem der Ansprüche 1 bis 7, **dadurch gekennzeichnet, daß** die Mischvorrichtung (20) ein Freifallmischer, ein Zwangsmischer o.dgl. ist.

9. Vorrichtung nach einem der Ansprüche 1 bis 8, **dadurch gekennzeichnet, daß** die Mischvorrichtung (20) einen Einfülltrichter (24) für den Bodenaushub (B) aufweist.

10. Vorrichtung nach Anspruch 9, **dadurch gekennzeichnet, daß** in oder über dem Einfülltrichter (24) ein Sieb (25) angeordnet ist.

11. Vorrichtung nach Anspruch 9 oder 10, **dadurch gekennzeichnet, daß** der Mischvorrichtung (20) und/oder dem Einfülltrichter (24) ein Förderband zugeordnet ist.

12. Vorrichtung nach einem der Ansprüche 1 bis 11, **dadurch gekennzeichnet, daß** die Mischvorrichtung (20) mit einer Meßeinrichtung (26) zum Erfassen der in die Mischvorrichtung (20) eingefüllten Menge an Bodenaushub (B) versehen ist.

13. Vorrichtung nach Anspruch 12, **dadurch gekennzeichnet, daß** die Meßeinrichtung (26) eine Waage ist.

14. Vorrichtung nach einem der Ansprüche 1 bis 13, **dadurch gekennzeichnet, daß** jeder Behälter (30, 40) mit einer Meßeinrichtung (37 bzw. 47) zum Erfassen der in die Mischvorrichtung (20) dosiert eingebrachten Menge an Zuschlagstoff (Z1, Z2) versehen ist.

15. Vorrichtung nach Anspruch 14, **dadurch gekennzeichnet, daß** die Meßeinrichtung (37, 47) eine Waage, ein Durchflußmesser o.dgl. ist.

16. Vorrichtung nach einem der Ansprüche 1 bis 15, **dadurch gekennzeichnet, daß** die Behälter (30, 40) lösbar an dem Fahrzeug (12) befestigt sind.

17. Vorrichtung nach einem der Ansprüche 1 bis 16, **dadurch gekennzeichnet, daß** wenigstens drei Behälter (30, 40) für Zuschlagstoffe vorgesehen sind.

18. Vorrichtung nach einem der Ansprüche 1 bis 17, **dadurch gekennzeichnet, daß** in wenigstens einem Behälter (30, 40) ein Misch- oder Rührwerk vorgesehen ist.

19. Vorrichtung nach einem der Ansprüche 1 bis 18, **dadurch gekennzeichnet, daß** in die Mischvorrichtung (20), in den ersten Behälter (30) und/oder in den zweiten Behälter (40) wenigstens ein weiterer Zuschlagstoff einbringbar ist.

20. Vorrichtung nach einem der Ansprüche 1 bis 19, **dadurch gekennzeichnet, daß** ein Wassertank vorhanden ist, aus dem Wasser dosiert in die Mischvorrichtung (20), in den ersten Behälter (30) und/oder in den zweiten Behälter (40) einbringbar ist.

21. Vorrichtung nach einem der Ansprüche 1 bis 20, **dadurch gekennzeichnet, daß** das in der Rechnereinheit (50) gespeicherte Steuerprogramm (54) zur Herstellung einer fließfähigen Mischung (M) über eine Auswahl- und Anzeigeeinrichtung (60) vorwählbar ist.

22. Vorrichtung nach einem der Ansprüche 1 bis 21, **dadurch gekennzeichnet, daß** das Steuerprogramm (54) zur Herstellung einer fließfähigen Mischung (M) anhand der Art, der Beschaffenheit und/oder der Menge des in die Mischvorrichtung (20) eingefüllten Bodenaushubs (B) von der Rechnereinheit (50) auswählbar ist.

23. Vorrichtung nach Anspruch 21 oder 22, **dadurch gekennzeichnet, daß** über die Auswahl- und Anzeigeeinrichtung (60) Beschaffenheitsangaben, Mengenangaben, Misch- und/oder Verfahrensparameter vorgebbar sind.

24. Vorrichtung nach Anspruch 21 bis 23, **dadurch gekennzeichnet, daß** die Auswahl- und Anzeigeeinrichtung (60) wenigstens einen akustischen, optischen und/oder taktilen Signalgeber (62) aufweist.

25. Vorrichtung nach Anspruch 21 bis 24, **dadurch gekennzeichnet, daß** die Rechnereinheit (50) die von den Meßeinrichtungen (26, 37, 47) ermittelten Meßwerte erfaßt und speichert.

26. Vorrichtung nach Anspruch 25, **dadurch gekennzeichnet, daß** die Rechnereinheit (50) Fahr- und Verbrauchswerte des Fahrzeugs (12) erfaßt.

27. Vorrichtung nach Anspruch 25 oder 26, **dadurch gekennzeichnet, daß** die Rechnereinheit (50) die von den Meßeinrichtungen (26, 37, 47) ermittelten Meßwerte und/oder die erfaßten Fahr- und Verbrauchswerte des Fahrzeugs (12) in einem Protokoll zusammenfaßt.

28. Vorrichtung nach einem der Ansprüche 1 bis 27, **dadurch gekennzeichnet, daß** an die Rechnereinheit (50) eine Ausgabeeinheit (64) angeschlossen ist.

29. Vorrichtung nach Anspruch 28, **dadurch gekennzeichnet, daß** die Ausgabeeinheit (64) eine Schnittstelle, ein Bildschirm, ein Drucker, ein Speichermedium o.dgl. ist.

30. Vorrichtung nach einem der Ansprüche 1 bis 29, **dadurch gekennzeichnet, daß** die Einrichtung (70) zum Ausbringen der fertigen Mischung (M) aus der Mischvorrichtung (20) eine Pumpe, eine Rutsche, eine Schütte, ein Förderband o.dgl. ist.
